# EUROPEAN PATENT SPECIFICATION

(11) **EP 2 865 927 B1**
(45) Date of publication and mention of the grant of the patent: **21.11.2018**
(21) Application number: 13809792.8
(22) Date of filing: 01.04.2013
(51) Int. Cl.: F16J 15/3224, F16J 15/3228, F01D 25/18

(54) **SEALING DEVICE**
DICHTUNGSVORRICHTUNG
DISPOSITIF D'ÉTANCHÉITÉ

(30) Priority: 25.06.2012 JP 2012141625
(43) Date of publication of application: 29.04.2015
(73) Proprietor: Eagle Industry Co., Ltd., Minato-ku Tokyo 105-8587 (JP)
(72) Inventor: OIYAMA Koichiro, Tokyo 105-8587 (JP)
(74) Representative: TBK
(86) International application number: PCT/JP2013/059937
(87) International publication number: WO 2014/002562

(56) References cited:
- JP-A- H08 189 563
- JP-A- H09 119 462
- JP-A- 2009 068 643
- US-A- 4 946 296
- US-A1- 2007 076 993
- US-B1- 6 170 833
- US-B1- 6 702 295

## Description

### [Technical Field]

The present invention relates to a sealing device that seals an annular gap between a shaft and a housing.

### [Background Art]

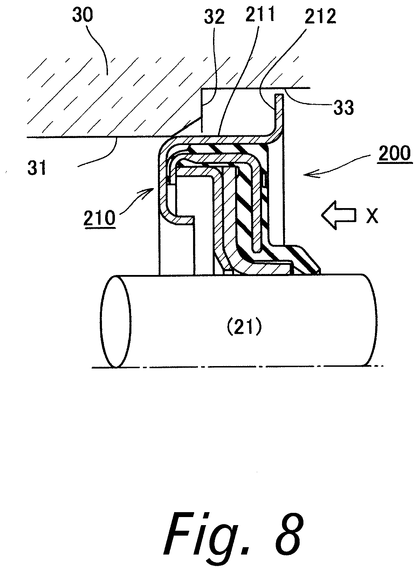

A sealing device according to a prior art will be described with reference to Fig. 8. Fig. 8 is a schematic cross sectional view showing a sealing device according to a prior art in the process of fitting.

The sealing device 200 is used to seal an annular gap between a housing 30 having a shaft hole and a rotating shaft 21 inserted in the shaft hole. The shaft hole provided in the housing 30 has a small diameter portion 31 and a large diameter portion 33. The sealing device 200 has a case 210 made of metal in which a sealing member and other components are fixed. Thus, the sealing device 200 is assembled as a cartridge.

The sealing device 200 constructed as above is fitted in the direction from the large diameter portion 33 to the small diameter portion 31 as indicated by the arrow X in Fig. 8. The case 210 of the sealing device 200 has a cylindrical portion 211 fitted into the inner circumferential surface of the small diameter portion 31 and a flange portion 212 extending from the end of the cylindrical portion 211 to the outer circumferential side and abutting against a step surface 32 between the small diameter portion 31 and the large diameter portion 33. Thus, by inserting the sealing device 200 until the flange portion 212 abuts against the step surface 32, the sealing device 200 can be positioned and secured in the housing 30.

When the housing 30 is made of metal material such as aluminum, the sealing device 200 is maintained in a stably fitted state in the housing 30. In contrast, when a resin material such as PPS is used as the material of the housing 30 for the purpose of weight reduction or the like, fitting force of the cylindrical part 211 of the case 210 against the small diameter portion 31 may be decreased due to creeping or heat expansion when used at high temperatures. Consequently, when a force acts on the sealing device 200 in the direction opposite to the direction X in Fig. 8, the sealing device 200 may come off and thus the sealing function may be impaired.

Patent Literature 3 discloses a hub seal for installation on the wheel end of a heavy duty trailer or truck which includes an annular casing, an elastomeric sealing ring supported within the annular casing and including an axially extending sealing lip, an annular sleeve mounted coaxial with the annular casing, the annular sleeve having an axially extending sealing surface, and a spring for biasing the axially extending sealing lip against the axially extending sealing surface such that a substantial portion of the sealing lip is in sealing engagement with the sealing surface over a substantial contact area.

### [Citation List]

### [Patent Literature]

Patent Literature 1: JP 3137481 U
Patent Literature 2: JP S61-2376 U
Patent Literature 3: US 6 170 833 B1

### [Summary of Invention]

### [Technical Problem]

An object of the present invention is to provide a sealing device in which coming off from the housing is suppressed with a simple structure even when the housing is made of resin.

### [Solution to Problem]

To solve the above problem, the present invention employs the following solution.

According to the present invention, there is provided a sealing device for sealing an annular gap between a housing made of resin having a stepped shaft hole and a shaft inserted in the shaft hole, the shaft hole having a small diameter portion and a large diameter portion with a diameter larger than that of the small diameter portion, the sealing device to be fitted in a direction from the large diameter portion to the small diameter portion, the sealing device comprising:
at least one sealing member being slidable on the outer circumferential surface of the shaft; and
a case made of metal in which the at least one sealing member is fixed,
the case comprising:
   a cylindrical portion to be fitted into the inner circumferential surface of the small diameter portion,
   a flange portion extending to the outer circumferential side from an end of the cylindrical portion and abutting against a step surface between the small diameter portion and the large diameter portion so that the sealing device is positioned,
   and a tab portion inclining to the outer circumferential side while extending from an end of the flange portion in an axial direction away from the cylindrical portion and having an edge digging into the inner circumferential surface of the large diameter portion.

According to the present invention, even when a force acts on the sealing device in the direction opposite to the fitting direction of the sealing device, the digging edge of the tab portion provided on the case digs into the inner circumferential surface of the large diameter portion of the housing, thereby suppressing the sealing device from coming off. Since the tab portion provided on the case of the sealing device suppresses the sealing device from coming off, it is not necessary to provide a separate dedicated part to prevent coming off of the sealing device. The tab portion is shaped in such a way as to incline to the outer circumferential side as it extends from the end of the flange portion in the axial direction away from the cylindrical portion. Therefore, in the process of fitting the sealing device, the tab portion is bent to the inner circumferential side and slidingly contacts with the inner circumferential surface of the large diameter portion, thus causing no interference in fitting the sealing device.

It is preferred that a recess is formed on the inner circumferential side of a joint portion between the flange portion and the tab portion.

This facilitates bending of the tab portion to the inner circumferential side, enabling better suppression of decrease in the operability in fitting the sealing device.

### [Advantageous Effects of Invention]

As described above, the present invention can suppress the sealing device from coming off from the housing with a simple construction, even when the housing is made of resin.

### [Brief Description of Drawings]

Fig. 1 is a schematic cross sectional view showing an exemplary application of a sealing device according to an embodiment of the present invention.
Fig. 2 is a schematic cross sectional view showing a sealing device according to a first embodiment of the present invention in a fitted state.
Fig. 3 is a schematic cross sectional view of a case of the sealing device according to the first embodiment of the present invention.
Fig. 4 is an enlarged view of a portion of Fig. 3.
Fig. 5 is a schematic cross sectional view showing a sealing device according to a second embodiment of the present invention in a fitted state.
Fig. 6 is a schematic cross sectional view showing a sealing device according to a third embodiment of the present invention in a fitted state.
Fig. 7 is an enlarged view of a portion of a schematic cross sectional view of a case according to a modification.
Fig. 8 is a schematic cross sectional view showing a sealing device according to a prior art in the process of fitting.

### [Description of Embodiments]

In the following, with reference to the drawings, modes for carrying out the present invention will be described in detail based on embodiments by way of example. The dimensions, materials, shapes, relative arrangements, and other features of the components that will be described in connection with the embodiments are not intended to limit the technical scope of the present invention only to them, unless particularly stated.

### (First Embodiment)

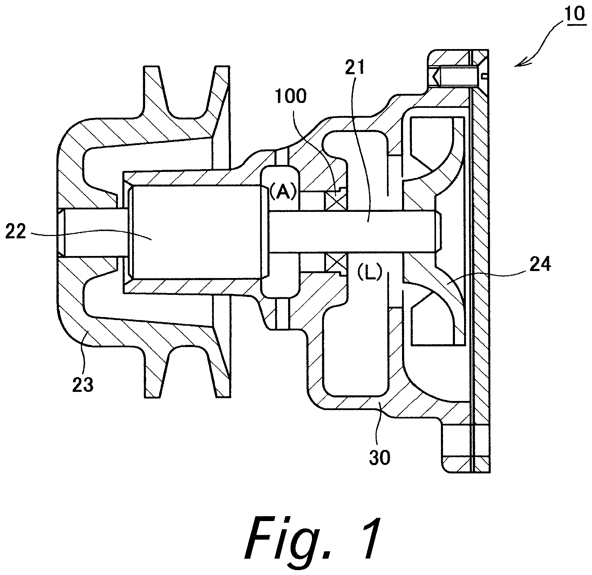

A sealing device according to a first embodiment of the present invention will be described with reference to Figs. 1 to 4.

### <Exemplary Application of Sealing Device>

An exemplary application of a sealing device 100 according to an embodiment of the present invention will be described with reference to Fig. 1. Fig. 1 is a schematic cross sectional view of a water pump 10 for an automobile. The water pump 10 has a rotating shaft 21 and a housing 30 having a shaft hole in which the rotating shaft 21 is inserted. The rotating shaft 21 is provided with a bearing 22 that allows the rotating shaft 21 to rotate smoothly. A pulley 23 is attached to one end of the rotating shaft 21. A rotational driving force is transmitted to the pulley 23 by a belt or the like, which is not shown in the drawings. An impeller 24 for pumping cooling water (LLC) is attached to the other end of the rotating shaft 21. The sealing device 100 is arranged in an annular gap between the rotating shaft 21 and the housing 30 to prevent the cooling water from leaking to the outside (i.e. to the side (A) opposite to the sealed liquid side (L)). Thus, the sealed liquid in this embodiment is the cooling water.

### <Construction of Sealing Device>

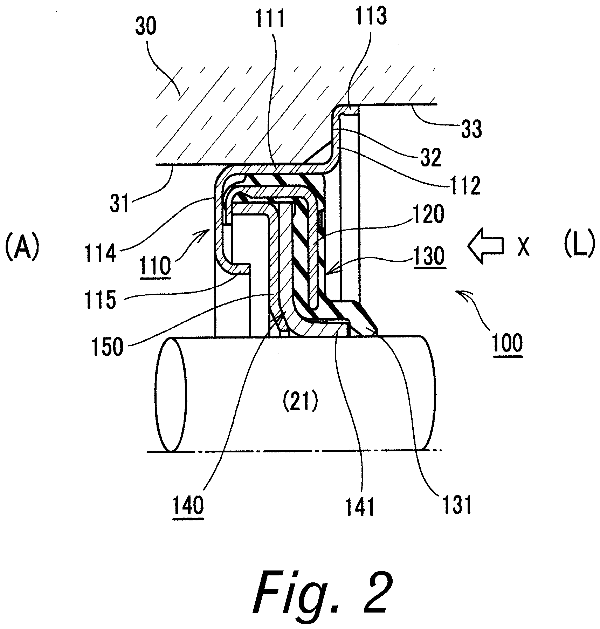

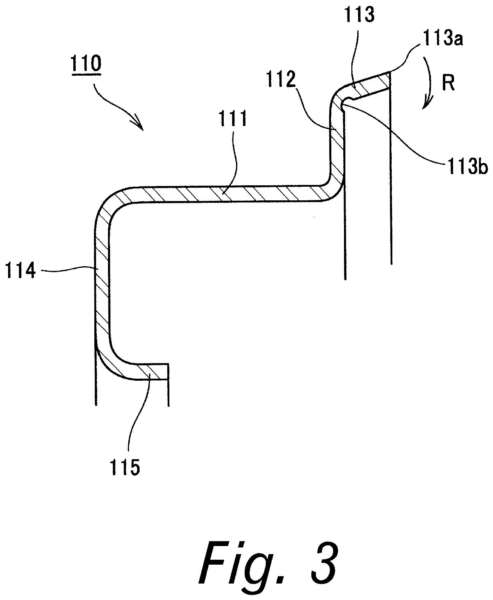

The sealing device 100 according to the first embodiment of the present invention will be described with reference to Figs. 2 to 4. Fig. 2 is a schematic cross sectional view showing the sealing device according to the first embodiment of the present invention in a fitted state. Fig. 3 is a schematic cross sectional view of a case of the sealing device according to the first embodiment of the present invention. Both the cross sectional views are taken on a plane containing the center axis of the rotating shaft 21. Fig. 3 is an enlarged view of a portion of Fig. 2. The sealing device 100 has a rotationally symmetric shape.

The sealing device 100 is composed of a case (cartridge) 110 made of metal, a metal ring 120, a first sealing member 130 made of rubber integrated with the metal ring 120, a second sealing member 140 made of synthetic resin, and a backup ring 150 made of metal.

The first sealing member 130 and the second sealing member 140 both have, at their inner circumferential ends, sealing lips 131 and 141 that extend toward the sealed liquid side (L) and slide on the outer circumferential surface of the rotating shaft 21. The backup ring 150 supports the second sealing member 140 on the side (A) opposite to the sealed liquid side (L) to maintain the posture of the sealing lip 141 of the second sealing member 140. By maintaining the posture of the sealing lip 141 of the second sealing member 140, the posture of the sealing lip 131 of the first sealing member 130 is also maintained

The first sealing member 130 integrated with the metal ring 120, the second sealing member 140, and the backup ring 150 are fixed in the case 110. Thus, the sealing device 100 is assembled as a cartridge.

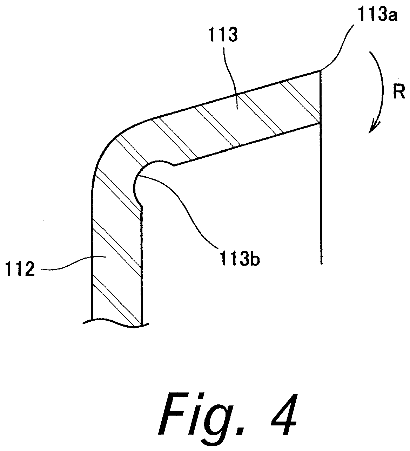

Now, the case 110 will be described more specifically with reference particularly to Figs. 3 and 4. The case 110 has a cylindrical portion 111, a flange portion 112 extending to the outer circumferential side from the end (the end on the sealed liquid side (L)) of the cylindrical portion 111, and an annular tab portion 113 extending from the end of the flange portion 112. The case 110 further has an inward flange portion 114 extending to the inner circumferential side from the end of the cylindrical portion 111 on the side (A) opposite to the sealed liquid side (L), and a cylindrical portion 115 extending from the inner circumferential end of the inward flange portion 114 to the sealed liquid side (L). In an annular space defined by the cylindrical portion 111, the inward flange portion 114, and the cylindrical portion 115 of the case 110, the outer circumferential portions of the above-described first sealing member 130 integrated with the metal ring 120, the second sealing member 140, and the backup ring 150 are fixed and secured.

The cylindrical portion 111 of the case 110 is configured such that an outer diameter of its outer circumferential surface is slightly larger than the inner diameter of a small diameter portion 31 of the shaft hole of the housing 30. This allows the cylindrical portion 111 to be fitted into the inner circumferential surface of the small diameter portion 31 by fitting the sealing device 100 in the direction from a large diameter portion 33 to the small diameter portion 31 as indicated by arrow X in the drawing. By inserting the sealing device 100 until the flange portion 112 abuts against the step surface 32 (between the small diameter portion 31 and the large diameter portion 33), the sealing device 100 is positioned and secured in the housing 30.

The tab portion 113 is configured such that it inclines to the outer circumferential side as it extends from the end of the flange portion 112 in the axial direction away from the cylindrical portion 111. The tab portion 113 is configured to bend to the inner circumferential side (in the direction indicated by arrow R in Figs. 3 and 4) and to slidingly contact with inner circumferential surface of the large diameter portion 33 of the housing 30 during the process of fitting the sealing device 100. The tab portion 113 has, at its outer circumferential end, a digging edge 113a that can dig into the inner circumferential surface of the large diameter portion 33 when a force acts on the sealing device 100 in the direction opposite to the fitting direction (indicated by arrow X in Fig. 2) of the sealing device 100. A force in the direction opposite to the fitting direction of the sealing device may act on the sealing device 100 when the pressure in the interior of the pump (i.e. the sealed liquid side (L)) is in negative pressure.

In this embodiment, a recess 113b is provided on the inner circumferential side of the joint portion between the flange portion 112 and the tab portion 113.

### <Advantages of the Sealing Device According to the Embodiment>

When a force acts on the sealing device 100 according to this embodiment in the direction opposite to the fitting direction of the sealing device 100, the digging edge 113a of the tab portion 113 provided on the case 110 will dig into the inner circumferential surface of the large diameter portion 33 of the housing 30. This prevents the sealing device 100 from coming off. Moreover, since the tab portion 113 provided on the case 110 of the sealing device 100 prevents the sealing device 100 from coming off, it is not necessary to provide a separate dedicated part to prevent coming off of the sealing device. During the process of fitting the sealing device 100, since the tab portion 113 bends to the inner circumferential side and slidingly contacts with the inner circumferential surface of the large diameter portion 33, there is no interference in fitting the sealing device 100. In this embodiment, in particular, since a recess 113b is provided on the inner circumferential side of the joint portion between the flange portion 112 and the tab portion 113, the tab portion 113 can be easily bent to the inner circumferential side, thereby enabling better suppression of decrease in the operability in fitting the sealing device 100. Another advantage is that since the tab portion 113 can be easily bent to the inner circumferential side, the inner circumferential surface of the large diameter portion 33 of the housing 30 can be prevented from being scratched.

### (Second Embodiment)

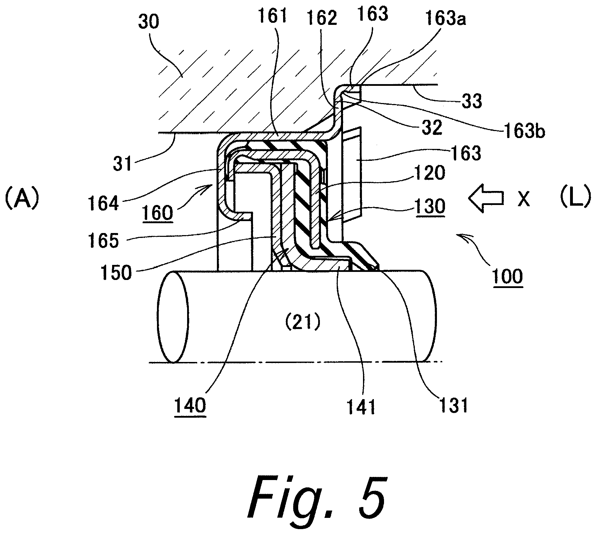

Fig. 5 shows a second embodiment of the present invention. In this embodiment, a modification of the case in the above-described first embodiment will be described. In the above-described first embodiment, the tab portion extending from the end of the flange portion of the case has an annular shape. In the case where the tab portion is annular, the tab portion has relatively high rigidity. Thus, depending on the thickness of the material of the case or the diameter of the tab portion or other factors, the force needed to bend the tab portion to the inner circumferential side may become high and the inserting force to fit the sealing device may also become high. In view of this, in this embodiment, the tab portion is arranged partially along the circumference. Since the components other than the case and the operation thereof are the same as those in the first embodiment, the same constitutional parts will be denoted by the same characters and will not be further described.

The metal case (cartridge) 160 in this embodiment also has a cylindrical portion 161, a flange portion 162 extending to the outer circumferential side from the end (on the sealed liquid side (L)) of the cylindrical portion 161, and a tab portion 163 extending from the end of the flange portion 162, as with the first embodiment. The Tab portion 163 in this embodiment, however, is different from the first embodiment in that, instead of an annular shape, a plurality of tab portions 163 are provided partially along the circumference.

The case 160 further has an inward flange portion 164 extending to the inner circumferential side from the end of the cylindrical portion 161 on the side (A) opposite to the sealed liquid side (L) and a cylindrical portion 165 extending from the inner circumferential end of the inward flange portion 164 to the sealed liquid side (L). In an annular space defined by the cylindrical portion 161, the inward flange portion 164, and the cylindrical portion 165 of the case 160, the outer circumferential portions of the first sealing member 130 integrated with the metal ring 120, the second sealing member 140, and the backup ring 150 are fixed and secured.

The cylindrical portion 161 of the case 160 is configured such that an outer diameter of its outer circumferential surface is slightly larger than the inner diameter of a small diameter portion 31 of the shaft hole of the housing 30. This allows the cylindrical portion 161 to be fitted into the inner circumferential surface of the small diameter portion 31 by fitting the sealing device 100 in the direction from a large diameter portion 33 to the small diameter portion 31 as indicated by arrow X in the drawing. By inserting the sealing device 100 until the flange portion 162 abuts against the step surface 32, the sealing device 100 is positioned and secured in the housing 30.

The tab portion 163 is configured such that it inclines to the outer circumferential side as it extends from the end of the flange portion 162 in the axial direction away from the cylindrical portion 161. The tab portion 163 is configured to bend to the inner circumferential side and to slidingly contact with inner circumferential surface of the large diameter portion 33 of the housing 30 during the process of fitting the sealing device 100. The tab portion 163 has, at its outer circumferential end, a digging edge 163a that can dig into the inner circumferential surface of the large diameter portion 33 when a force acts on the sealing device 100 in the direction opposite to the fitting direction (indicated by arrow X in Fig. 5) of the sealing device 100.

In this embodiment too, a recess 163b is provided on the inner circumferential side of the joint portion between the flange portion 162 and the tab portion 163.

The sealing device 100 having the above-described construction also has the advantages same as those of the above-described first embodiment. In the sealing device 100 according to this embodiment, the tab portion 163 is configured such that, instead of an annular shape, a plurality of tab portions 163 is provided partially along the circumference. This allows the tab portions 163 to bend to the inner circumferential side more easily than in the case of the first embodiment, enabling better suppression of decrease in the operability in fitting the sealing device 100. Moreover, the inner circumferential surface of the large diameter portion 33 of the housing 30 can be better prevented from being scratched.

### (Third Embodiment)

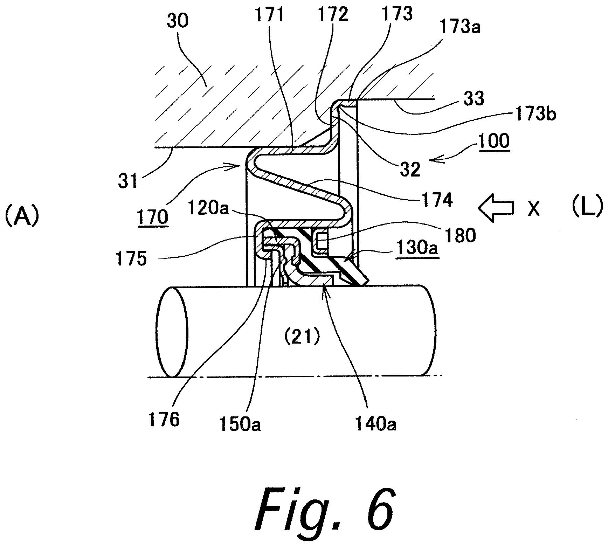

Fig. 6 shows a third embodiment of the present invention. Depending on a relation between the diameter of the rotating shaft and the diameter of the shaft hole of the housing, the size of the annular gap to be sealed by the sealing device may be large in some cases. In view of this, in the sealing device according to this embodiment, the case is designed to have a portion having an S-shaped cross section so that it has resiliency with respect to the radial direction. Thus, it can provide sufficiently effective sealing even for a large annular gap without deteriorating the operability in fitting. The construction of the sealing device other than the case is basically the same as that of the above-described first embodiment and will be described in a simplified manner.

The sealing device 100 according to this embodiment also has a case (cartridge) 170 made of metal, a metal ring 120a, a first sealing member 130a, a second sealing member 140a, and a backup ring 150a, as with the first embodiment. In this embodiment, the metal ring 120a and the first sealing member 130a are configured separately. Although the metal ring 120a, the first sealing member 130a, the second sealing member 140a, and the backup ring 150a fixed in the case 170 are different in shape or other features from those in the first embodiment, their basic functions are the same as those in the first embodiment and thus they will not be described further. The sealing device 100 according to this embodiment is provided with an adapter 180 made of metal to secure the above-described various components in the case 170.

The case 170 will be described in the following in more detail.

As with the first embodiment, the case 170 according to this embodiment has a cylindrical portion 171, a flange portion 172 extending to the outer circumferential side from the end (on the sealed liquid side (L)) of the cylindrical portion 171, and a tab portion 173 extending from the end of the flange portion 172. The tab portion 173 in this embodiment is annular as with the above-described first embodiment. The annular tab portion may be replaced by a plurality of tab portions provided partially along the circumference.

The case 170 further has a inflected portion 174 extending to the inner circumferential side from the end of the cylindrical part 171 on the side (A) opposite to the sealed liquid side (L), an inward flange portion 175 extending to the inner circumferential side from the inflected portion 174, and a cylindrical portion 176 extending from the inner circumferential end of the inward flange portion 175 toward the sealed liquid side (L). The cylindrical portion 171 and the inflected portion 174 constitute the portion having an S-shaped cross section.

In an annular space defined by the inflected portion 174, the inward flange portion 175, and the cylindrical portion 176 of the case 170, the outer circumferential portions of the metal ring 120a, the first sealing member 130a, the second sealing member 140a, and the backup ring 150a are fixed and secured.

The cylindrical portion 171 of the case 170 is configured such that an outer diameter of its outer circumferential surface is slightly larger than the inner diameter of a small diameter portion 31 of the shaft hole of the housing 30. This allows the cylindrical portion 171 to be fitted into the inner circumferential surface of the small diameter portion 31 by fitting the sealing device 100 in the direction from a large diameter portion 33 to the small diameter portion 31 as indicated by arrow X in the drawing. By inserting the sealing device 100 until the flange portion 172 abuts against the step surface 32, the sealing device 100 is positioned and secured in the housing 30.

The tab portion 173 is configured such that it inclines to the outer circumferential side as it extends from the end of the flange portion 172 in the axial direction away from the cylindrical portion 171. The tab portion 173 is configured to bend to the inner circumferential side and to slidingly contact with inner circumferential surface of the large diameter portion 33 of the housing 30 during the process of fitting the sealing device 100. The tab portion 173 has, at its outer circumferential end, a digging edge 173a that can dig into the inner circumferential surface of the large diameter portion 33 when a force acts on the sealing device 100 in the direction opposite to the fitting direction (indicated by arrow X in Fig. 6) of the sealing device 100.

In this embodiment too, a recess 173b is provided on the inner circumferential side of the joint portion between the flange portion 172 and the tab portion 173.

The sealing device 100 having the above-described construction also has the advantages same as those of the above-described first embodiment.

### (Others)

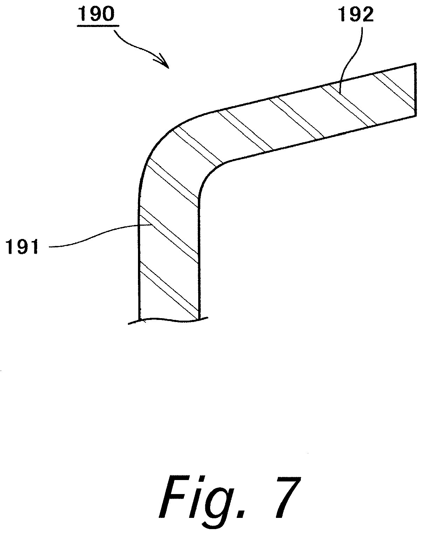

In the above-described embodiments, a recess is provided on the inner circumferential side of the joint portion between the flange portion and the tab portion to facilitate bending of the tab portion to the inner circumferential side. However, even when the recess is not provided, depending on the thickness of the material of the case or the diameter of the tab portion or other factors, there are circumstances when the tab portion can be bent to the inner circumferential side to a sufficient extent. In such circumstances, as shown in Fig. 7 as a case 190, a construction in which a recess is not provided on the inner circumferential side of the joint portion between the flange portion 191 and the tab portion 192 may be employed. As will be understood, the construction without a recess shown in Fig. 7 can be applied to all of the above-described first to third embodiments.

In the above-described embodiments, cases where the sealing device is applied to a water pump 10 for an automobile have been described. The present invention can be applied to various equipment that needs sealing an annular gap between a housing and a shaft rotating relative to each other.

### [Reference Signs List]

10: water pump
21: rotating shaft
22: bearing
23: pulley
24: impeller
30: housing
31: small diameter portion
32: step surface
33: large diameter portion
100: sealing device
110, 160, 170, 190: case
111, 161, 171: cylindrical portion
112, 162, 172, 191: flange portion
113, 163, 173, 192: tab portion
113a, 163a, 173a: edge
113b, 163b, 173b: recess
114, 164, 175: inward flange portion
115, 165, 176: cylindrical portion
120, 120a: metal ring
130, 130a: first sealing member
131: sealing lip
140, 140a: second sealing member
141: sealing lip
150, 150a: backup ring
174: inflected portion
180: adapter

## Claims

1. A sealing device (100) for sealing an annular gap between a housing (30) made of resin having a stepped shaft hole and a shaft (21) inserted in the shaft hole, the shaft hole having a small diameter portion (31) and a large diameter portion (33) with a diameter larger than that of the small diameter portion (31), the sealing device (100) to be fitted in a direction from the large diameter portion (33) to the small diameter portion (31) of the housing (30), the sealing device (100) comprising:
at least one sealing member (130, 140); and
a case (110; 160; 170; 190) made of metal in which the at least one sealing member (130, 140) is fixed,
the case (110; 160; 170; 190) comprising:
a cylindrical portion (111; 161; 171), and
a flange portion (112; 162; 172; 191) extending to the outer circumferential side from an end of the cylindrical portion (111; 161; 171) and being configured to abut against a step surface (32) between the small diameter portion (31) and the large diameter portion (33) of the housing (30) so that the sealing device (100) is capable to be positioned,
**characterized in that** the at least one sealing member (130, 140) is configured to be slidable on the outer circumferential surface of the shaft (21); and
the case (110; 160; 170; 190) further comprises a tab portion (113; 163; 173; 192) inclining to the outer circumferential side while extending from an end of the flange portion (112; 162; 172; 191) in an axial direction away from the cylindrical portion (111; 161; 171) and having an edge (113a; 163a; 173a) configured to dig into the inner circumferential surface of the large diameter portion (33) of the housing (30) when the tab portion (113; 163; 173; 192) is bent to the inner circumferential side, and
the cylindrical portion (111; 161; 171) is configured to be fitted into and to be in contact with the inner circumferential surface of the small diameter portion (31) of the housing (30).

2. A sealing device (100) according to claim 1, wherein a recess (113b; 163b; 173b) is formed on the inner circumferential side of a joint portion between the flange portion (112; 162; 172; 191) and the tab portion (113; 163; 173; 192) so that bending of the tab portion (113; 163; 173; 192) to the inner circumferential side of the housing (30) is facilitated.

## Patentansprüche

1. Dichtvorrichtung (100) zum Abdichten eines ringförmigen Spalts zwischen einem Gehäuse (30), das aus einem Harz hergestellt ist, mit einem gestuften Wellenloch, und einer Welle (21), die in das Wellenloch eingesetzt ist, wobei das Wellenloch einen kleindurchmessrigen Abschnitt (31) und einen großdurchmessrigen Abschnitt (33) mit einem Durchmesser, der größer als jener des kleindurchmessrigen Abschnitts (31) ist, hat, wobei die Dichtvorrichtung (100) in einer Richtung von dem großdurchmessrigen Abschnitt (33) zu dem kleindurchmessrigen Abschnitt (31) des Gehäuses (30) hin gepasst ist, wobei die Dichtvorrichtung (100) Folgendes aufweist:
zumindest ein Dichtbauteil (130, 140); und
ein Gehäuse (110; 160; 170; 190), das aus Metall hergestellt ist, in dem das zumindest eine Dichtbauteil (130, 140) fixiert ist,
wobei das Gehäuse (110; 160; 170; 190) Folgendes aufweist:
einen zylindrischen Abschnitt (111; 161; 171), und
einen Flanschabschnitt (112; 162; 172; 191), der sich zu der Außenumfangsseite hin von einem Ende des zylindrischen Abschnitts (111; 161; 171) erstreckt und gestaltet ist, um gegen eine Stufenfläche (32) zwischen dem kleindurchmessrigen Abschnitt (31) und dem großdurchmessrigen Abschnitt (33) des Gehäuses (30) derart anzuliegen, dass die Dichtvorrichtung (100) in der Lage ist, positioniert zu werden,
**dadurch gekennzeichnet, dass** das zumindest eine Dichtbauteil (130, 140) gestaltet ist, um auf der Außenumfangsfläche der Welle (21) gleitfähig zu sein; und
das Gehäuse (110; 160; 170; 190) ferner einen Streifenabschnitt (113; 163; 173; 192) aufweist, der zu der Außenumfangsseite hin geneigt ist, während er sich von einem Ende des Flanschabschnitts (112; 162; 172; 191) in einer axialen Richtung weg von dem zylindrischen Abschnitt (111; 161; 171) erstreckt, und der einen Rand (113a; 163a; 173a) hat, der gestaltet ist, um sich in die Innenumfangsfläche des großdurchmessrigen Abschnitts (33) des Gehäuses (30) zu vergraben, wenn der Streifenabschnitt (113; 163; 173; 192) zu der Innenumfangsseite hin gebogen wird, und
der zylindrische Abschnitt (111; 161; 171) gestaltet ist, um in die Innenumfangsfläche des kleindurchmessrigen Abschnitts (31) des Gehäuses (30) eingepasst und mit dieser in Kontakt zu sein.

2. Dichtvorrichtung (100) nach Anspruch 1, wobei eine Vertiefung (113b; 163b; 173b) auf der Innenumfangsseite eines Verbindungsabschnitts zwischen dem Flanschabschnitt (112; 162; 172; 191) und dem Streifenabschnitt (113; 163; 173; 192) derart ausgebildet ist, dass ein Biegen des Streifenabschnitts (113; 163; 173; 192) zu der Innenumfangsseite des Gehäuses (30) hin vereinfacht ist.

## Revendications

1. Dispositif d'étanchéité (100) pour sceller un espace annulaire entre un logement (30) réalisé à partir de résine ayant un trou d'arbre étagé et un arbre (21) inséré dans le trou d'arbre, le trou d'arbre ayant une partie de petit diamètre (31) et une partie de grand diamètre (33) avec un diamètre supérieur à celui de la partie de petit diamètre (31), le dispositif d'étanchéité (100) étant destiné à être monté dans une direction allant de la partie de grand diamètre (33) à la partie de petit diamètre (31) du logement (30), le dispositif d'étanchéité (100) comprenant :
au moins un élément d'étanchéité (130 ; 140) ; et
un boîtier (110 ; 160 ; 170 ; 190) réalisé à partir de métal, dans lequel le au moins un élément d'étanchéité (130, 140) est fixé,
le boîtier (110 ; 160 ; 170 ; 190) comprenant :
une partie cylindrique (111 ; 161 ; 171), et
une partie de bride (112 ; 162 ; 172 ; 191) s'étendant vers le côté circonférentiel externe à partir d'une extrémité de la partie cylindrique (111 ; 161 ; 171) et étant configurée pour venir en butée contre une surface de gradin (32) entre la partie de petit diamètre (31) et la partie de grand diamètre (33) du logement (30) de sorte que le dispositif d'étanchéité (100) peut être positionné,
**caractérisé en ce que** le au moins un élément d'étanchéité (130, 140) est configuré pour pouvoir coulisser sur la surface circonférentielle externe de l'arbre (21) ; et
le boîtier (110 ; 160 ; 170 ; 190) comprend en outre une partie de languette (113 ; 163 ; 173 ; 192) s'inclinant vers le côté circonférentiel externe tout en s'étendant à partir d'une extrémité de la partie de bride (112 ; 162 ; 172 ; 191) dans une direction axiale à distance de la partie cylindrique (111 ; 161 ; 171) et ayant un bord (113a ; 163a ; 173a) configuré pour s'enfoncer dans la surface circonférentielle interne de la partie de grand diamètre (33) du logement (30) lorsque la partie de languette (113 ; 163 ; 173 ; 192) est pliée vers le côté circonférentiel interne, et
la partie cylindrique (111 ; 161 ; 171) est configurée pour être montée dans et être en contact avec la surface circonférentielle interne de la partie de petit diamètre (31) du logement (30).

2. Dispositif d'étanchéité (100) selon la revendication 1, dans lequel un évidement (113b ; 163b ; 173b) est formé sur le côté circonférentiel interne d'une partie de joint entre la partie de bride (112 ; 162 ; 172 ; 191) et la partie de languette (113 ; 163 ; 173 ; 192) de sorte que le pliage de la partie de languette (113 ; 163 ; 173 ; 192) vers le côté circonférentiel interne du logement (30) est facilité.
